# EUROPEAN PATENT SPECIFICATION

(11) **EP 2 756 209 B1**
(45) Date of publication and mention of the grant of the patent: **03.06.2020**
(21) Application number: 12783349.9
(22) Date of filing: 14.09.2012
(51) Int. Cl.: F16H 57/04, F16H 57/037

(54) **GEAR TRANSMISSION HOUSING AND DRIVE AXLE ASSEMBLY INCORPORATING SAME**
ZAHNRADGETRIEBEGEHÄUSE UND ANTRIEBSACHSENANORDNUNG DAMIT
BOÎTIER DE TRANSMISSION À ENGRENAGE ET ENSEMBLE ESSIEU MOTEUR DANS LEQUEL LEDIT BOÎTIER EST INTÉGRÉ

(30) Priority: 15.09.2011 NL 2007426
(43) Date of publication of application: 23.07.2014
(73) Proprietor: Daf Trucks N.V., 5643 TW Eindhoven (NL)
(72) Inventor: BUUR, Maurice Josephus Anna Lucia, 5643 TW Eindhoven (NL); KERKHOF, Hubertus Leonardus Johannes, 5643 TW Eindhoven (NL)
(74) Representative: V.O.
(86) International application number: PCT/NL2012/050647
(87) International publication number: WO 2013/039396

(56) References cited:
- EP-A2- 1 906 036
- JP-A- 7 217 725
- US-A- 2 037 074

## Description

The invention relates to optimisation of lubricant levels in driven vehicle axles that contain gear transmissions and shaft bearings.

To improve the efficiency of vehicle transmissions it has been attempted to reduce churning losses caused by rotating elements that are immersed to a substantial extent in a liquid lubricant, such as lubricating oil. Various proposals, such as disclosed in JP 7-217725 A, have been made by which part of the lubricating oil is deviated to a buffer reservoir, from which it is returned with a controlled delay to the elements to be lubricated. Usually a collecting reservoir that receives an overflow of excess lubricant returns this lubricant back to a common sump via a restricted orifice. Such restrictions hold a serious risk of becoming clogged up by contaminations in the oil, after which proper lubrication can become completely interrupted. Furthermore the excess lubricating oil, while being splash-fed to the collecting reservoir, may have difficulty in reaching bearings that also require lubrication. There have also been proposals to arrange for an oil level that depends on the load of the transmission. Such load depending system often requires pump devices or valves and auxiliary control systems, which substantially add to the complication and costs. Common to many of these known devices are also oil retaining receptacles that retain a small enough amount of oil in the direct proximity of bearings to ensure lubrication thereof. To form such oil retaining receptacles auxiliary structural elements are affixed adjacent to the bearing locations in transmission housings. While such retaining receptacles or reservoirs can be made relatively cheaply from sheet metal or plastic, they constitute auxiliary parts that add to the assembly effort and costs. Moreover such components are critical to the performance of vehicle transmissions that function with reduced oil levels, and inadvertent omissions in manufacture or repair can have dire consequences.

US2037074 discloses a drive axle assembly according to the precharacterizing portion of claim 1.

It is an object of the present invention to propose an improved drive axle assembly. In particular it is an object of the present invention to capture lubricating oil in critical locations reliably and efficiently.

To this end the invention proposes a drive axle assembly as defined in claim 1. The dependent claims 2-4 concern particular embodiments of the invention as defined in claim 1.

An advantageous embodiment of the invention will become clear from the appended description with reference to the accompanying drawings, in which:
Figure 1 is a driven rear axle assembly, with included final drive, suitable for a commercial or heavy duty vehicle;
Figure 2 is a final drive gear carrier for use with the rear axle assembly of Figure 1;
Figure 3 is a partial cross section of a pinion bearing arrangement in the final drive carrier of Figure 2, according to the direction III-III as indicated in Figure 1;
Figure 4 is a rear view of the final drive gear carrier with gear elements mounted therein;
Figure 5 is the final drive gear carrier of Figure 2 viewed from a direction opposite to that of Figure 2; and
Figure 6 is an example of a bearing cap that is part of the final drive gear carrier as illustrated in Figure 4.

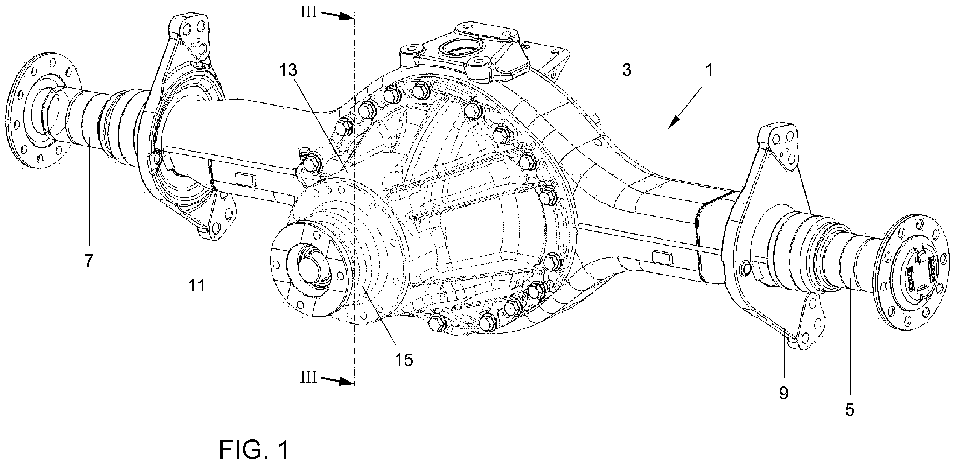

In Figure 1 a driven rear axle 1 for a motor vehicle is shown. The rear axle 1 includes a rear axle housing 3, in the form of a banjo-shaped body. Exiting from opposite ends of the banjo housing 3 are left hand and right hand half shafts 5, 7 that is use connect operatively to the wheels driving the motor vehicle (not shown but conventional). Also associated with the opposite ends of the banjo housing 3 are left hand and right hand mounting flanges 9, 11 for connecting the rear axle 1 to the axle guidance and suspension means of the vehicle (not shown but conventional). The axle 1, as shown in Figure 1, is further provided with a final drive gear carrier 13 and a pinion shaft bearing unit 15.

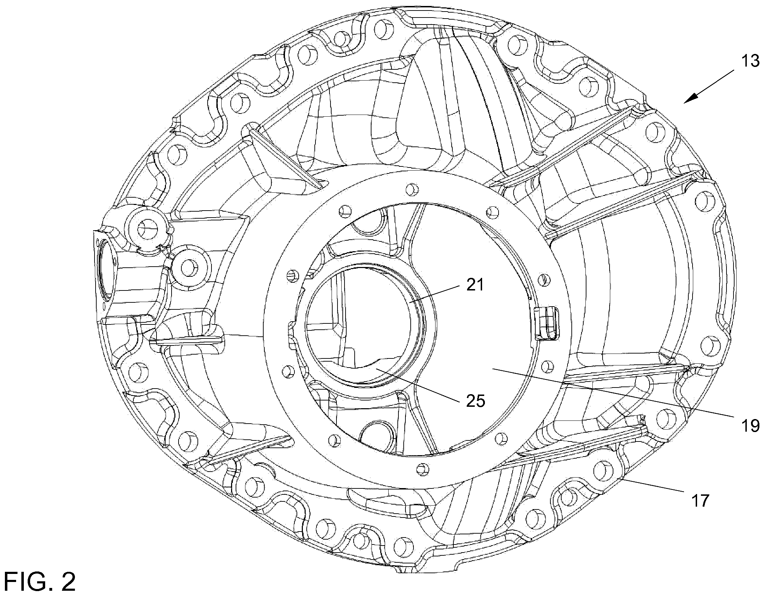

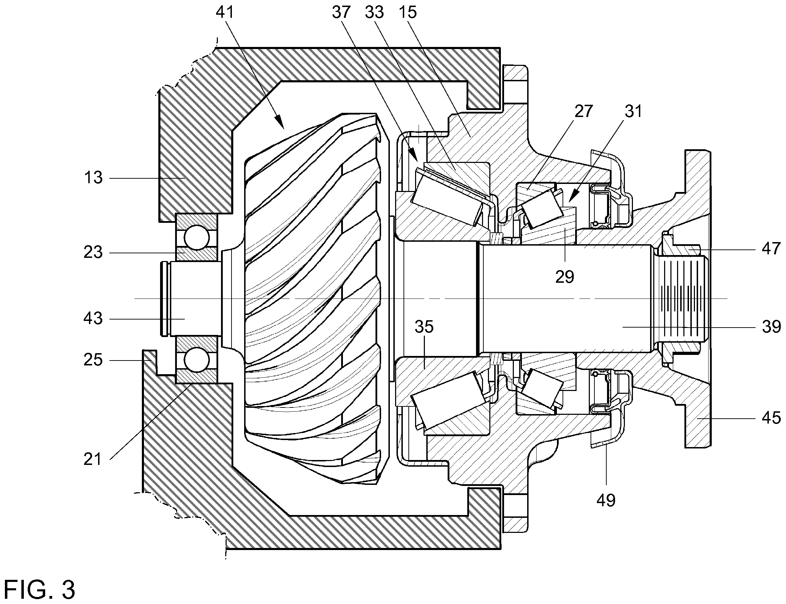

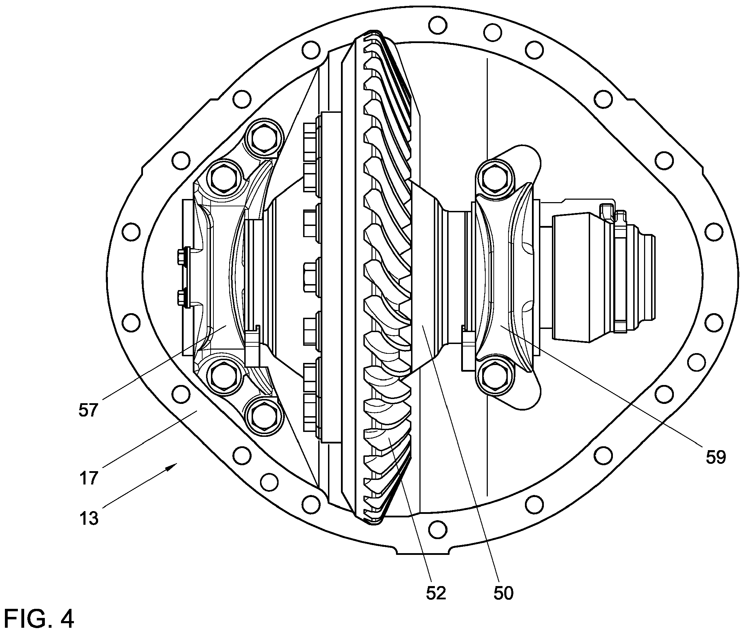

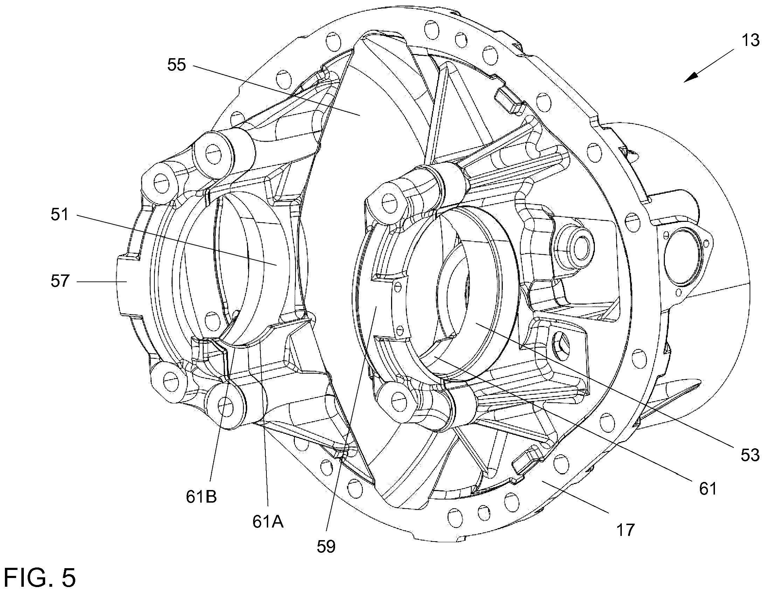

In Figures 2 and 5 the final drive gear carrier 13 is shown without gears being mounted therein as viewed from opposite directions. In contrast Figures 3 and 4 illustrate gear and bearing elements in position in the gear carrier 13. Generally the final drive gear carrier 13 as shown in Figure 2 has a mounting flange 17 for its attachment to the banjo axle housing 3 and a forward opening 19 for receiving the pinion shaft bearing unit 15. Also shown in Figure 2 is that the gear carrier 13 has an innermost pinion shaft bearing seat 21 for receiving a ball or roller bearing 23 as shown in Figure 3. Integrally formed in the gear carrier 13 and coinciding with the pinion shaft bearing seat 21 is an upstanding wall 25.

When reference is now had to the partial cross section shown in Figure 3, it is seen that the pinion bearing unit 15 is mounted in the gear carrier 13. The pinion bearing unit 15 carries the outer and inner races 27, 29 of a front tapered roller bearing 31, as well as the outer and inner races 33, 35 of a rear tapered roller bearing 37. Both inner races 29, 35 of the front and rear tapered roller bearings 31, 37 locate a pinion shaft 39 of a gear pinion 41. A rearward end 43 of the pinion shaft 39 is rotatably journalled in ball bearing 23. Ball bearing 23 is held in the bearing seat 21. The bearing seat 21 is machined in an integral portion of the gear carrier 13, that can conveniently be obtained by casting, moulding, sintering, or like non-material removing shaping techniques. The machining of the bearing seat 21 can be carried out in a conventional manner and no further machining or shaping is required to obtain the upstanding wall 25. In use the upstanding wall 25 will prevent lubrication oil that has reached the bearing 23 by splash distribution from flowing away from the lower anti-friction rollers of bearing 23. The opposite forward end of the pinion shaft 39 receives a driving flange 45 attached by a nut 47 engaging a screw threaded forward end of the pinion shaft 39. Thereby the inner races 29, 35 of the tapered roller bearings 31, 37 are firmly located between a boss of the driving flange 45 and the pinion gear 41. A rotatable fluid seal 49 is interposed between the rotating outer circumference of the driving flange 45 and the stationary pinion bearing unit 15 and ensures that lubricating oil cannot escape from the axle 1 when the drive gear carrier 13 and the axle housing 3 are assembled into a fully operational rear axle 1. In this regard the axle housing 3 (see Figure 1) defines an outer fluid barrier, which assembled with gear carrier 13 and pinion bearing unit 15 forms a fluid sealed interior for accommodating an amount of fluid lubricant and gear and bearing elements.

In Figure 4 a rear view of the final drive gear carrier shows gear elements such as a differential case 50 and a ring gear 52 mounted therein. The ring gear 52 is driven by the gear pinion 41 (shown in Figure 3) and rotates the differential case 50 on which it is mounted. The differential case 50 contains differential gears and distributes driving torque between the left and right hand half shaft driving shafts 5, 7 (shown in Figure 1). This arrangement however is conventional in driving axles and thus well known to the skilled person.

In Figure 5 a rear perspective view of the final drive gear carrier 13 illustrates the presence of laterally spaced left and right hand bearing seats 51, 53. These bearing seats 51, 53 are provided to accommodate bearings that can carry the differential case 50 and the ring gear 52 between them. For clarity the differential housing and ring gear are deleted from Figure 5, but these parts are conventional and need no further explanation beyond what has been shown in Figure 4. The ring gear when in position will rotate within a shallow cavity 55 provided in the gear carrier 13, and be driven by the pinion gear 41. For easy mounting of the differential case and its opposite end bearings, the left hand and right hand bearing seats 51, 53 are each formed with a respective removable left hand and right hand bearing caps 57, 59. Formed at the bottom portion of each of the left and right hand bearing seats 51, 53 is an upstanding wall 61, which is composed of a first complementary wall section 61A on the gear carrier 13 and a second complementary wall section 61B on one of the left and right hand bearing caps 57, 59.

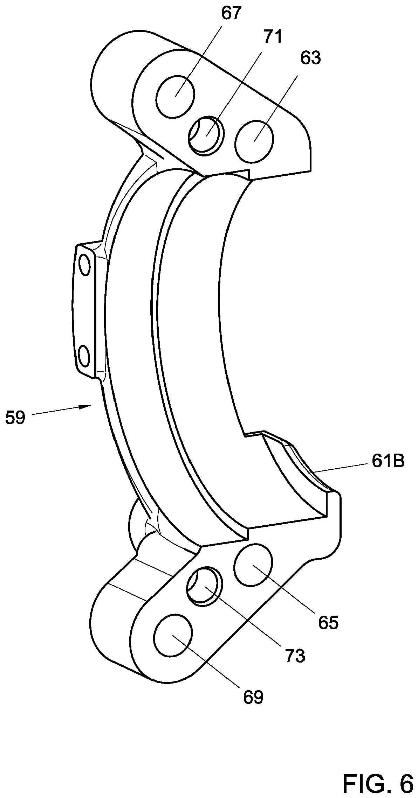

In Figure 6 an example of the right hand bearing cap 59 is shown detached from the gear carrier 13. The upstanding complementary second wall section 61B is clearly visible. Furthermore the right hand bearing cap 59 has mounting holes 63, 65, 67, 69 for fastener elements, such as screw studs or bolts, and recessed 71, 73 for receiving registering pins.

As with the bearing seat 21 for the pinion shaft bearing 23, the bearing seats 51, 53 for the differential case can be machined as usual with the also unmachined bearing caps 57, 59 in position. No additional cutting or shaping being required to form the upstanding walls 61.

In use the ring gear 52, shown in Figure 4 will be rotated within the shallow cavity 55 and distribute lubricating oil, contained in the axle housing 3 between the teeth of the pinion gear 41 and the teeth of the ring gear 52 itself. This type of splash lubrication, while adequate for the final drive gears, does not ensure proper lubrication of all bearings, when not at least a bottom portion of these bearings is also immersed below the lubricating oil level. The upstanding walls 25 and 61 at the respective pinion bearing seat 21 and laterally spaced differential case bearing seats 51, 53 ensure that the relevant bearings are nonetheless sufficiently immersed in lubricating oil. Thereby the level of lubricating oil in contact with the ring gear 52 can be significantly lowered and the total volume of lubricating oil in the axle housing 3 that is subject to churning by the ring gear substantially reduced. Reducing the churning of oil increases the mechanical efficiency of the vehicle. Collecting reservoirs as add-on elements to bearing locations, in accordance with the prior art, have been found cumbersome in assembly and difficult in ensuring proper fitment and reliability. Therefore the solution according to the invention of forming these collecting reservoirs by integrally formed upstanding walls is cost saving and secure.

Thus a gear transmission housing is described that can be composed of a rear axle housing 3, a final drive gear carrier 13, and a pinion bearing unit 15. This gear transmission housing has an outer fluid barrier, formed by the rear axle housing 3 that is adapted to define a fluid sealed interior for accommodating an amount of fluid lubricant not exceeding a predefined level. The gear transmission housing (3, 13, 15) also accommodates at least one rotatable gear wheel, such as ring gear 52, which is adapted to be partly immersed in the amount of fluid lubricant for causing splash distribution of the fluid lubricant when the at least one gear wheel 52 is rotated in the fluid sealed interior. The gear transmission housing further includes at least one bearing seat, such as a innermost pinion shaft bearing 21, or bearing seats 51, 53 for a differential case 50. The at least one bearing seat is positioned above the predefined fluid level in the fluid sealed interior for receiving a shaft bearing, such as a low friction bearing 23. A collecting reservoir is in fluid communication with the bearing seat and defines at least one upstanding wall member 25 or 61, as the case may be. The at least one upstanding wall member 25; 61 is integrally formed on the transmission housing 3, 13, 15. A drive axle assembly 1 can advantageously incorporate the gear transmission housing 3, 13, 15.

It is believed that the operation and construction of the present invention will be apparent from the foregoing description and drawings appended thereto. It will be clear to the skilled person that the invention is not limited to any embodiment herein described. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention.

## Claims

1. A drive axle assembly (1) incorporating a gear transmission housing (3, 13, 15) composed of a rear axle housing (3), a final drive gear carrier (13) and a pinion bearing unit (15), the pinion bearing unit (15) carrying outer and inner races (27, 29) of a front tapered roller bearing (31), as well as outer and inner races (33, 35) of a rear tapered roller bearing (37), both inner races (29, 35) of the front and rear tapered roller bearings (31, 37) locating a pinion shaft (39) of a pinion gear (41), a rearward end (43) of the pinion shaft (39) being rotatably journalled in a ball bearing (23), an opposite screw threaded forward end of the pinion shaft (39) receiving a driving flange (45) attached by a nut (47) engaging the forward end of the pinion shaft (39), the inner races (29, 35) of the tapered roller bearings (31, 37) being firmly located between a boss of the driving flange (45) and the pinion gear (41), the gear transmission housing (3, 13, 15) having an outer fluid barrier formed by the rear axle housing (3) which assembled with the gear carrier (13) and the pinion bearing unit (15) forms a fluid sealed interior for accommodating an amount of fluid lubricant not exceeding a predefined level, the gear transmission housing (3, 13, 15) accommodating a ring gear (52), the pinion gear (41) drivingly engaging the ring gear (52), the ring gear (52) being adapted to be partly immersed in an amount of fluid lubricant for causing splash distribution of the fluid lubricant when, in use, the ring gear (52) is rotated in the fluid sealed interior, the gear transmission housing (3, 13, 15) further including an innermost pinion shaft bearing seat (21) for receiving the ball bearing (23) and laterally spaced left and right hand bearing seats (51, 53) accommodating bearings carrying a differential case (50) and the ring gear (52), the innermost pinion shaft bearing seat (21) and laterally spaced left and right hand case bearing seats (51, 53) being positioned above the predefined fluid level in the fluid sealed interior for receiving the ball bearing (23), said ball bearing (23) being held in the innermost pinion shaft bearing seat (21), the gear transmission housing (3, 13, 15) further including a collecting reservoir in fluid communication with the innermost pinion shaft bearing seat (21), and integrally formed in the final drive gear carrier (13) and coinciding with the innermost pinion shaft bearing seat (21) is an upstanding wall (25), the collecting reservoir being formed by the upstanding wall (25) for capturing, in use, a portion of splash distributed fluid lubricant, **characterised in that** the laterally spaced left hand and right hand bearing seats (51, 53) are each formed with a respective removable left hand and right hand bearing cap (57, 59), **in that** integrally formed at a bottom portion of each of the laterally spaced left and right hand bearing seats (51, 53) is a further upstanding wall (61), the further upstanding walls (61) being each composed of a first complementary wall section (61A) on the gear carrier (13) and a second complementary wall section (61B) on one of the left and right hand bearing caps (57, 59), and **in that** a further collecting reservoir is formed by each further upstanding wall (61) for capturing, in use, a portion of splash distributed fluid lubricant, the further upstanding walls (61) and the laterally spaced left hand and right hand bearing seats (51, 53) ensuring that the bearings carrying the differential case (50) and the ring gear (52) are sufficiently immersed in fluid lubricant.

2. A drive axle assembly (1) according to claim 1, wherein all upstanding walls (25; 61) are integrally formed by casting.

3. A drive axle assembly (1) according to claim 1, wherein all upstanding walls (25; 61) are integrally formed by at least one of machining and forming of the respective bearing seat (21; 51, 53).

4. A drive axle assembly (1) according to claim 1, 2 or wherein the final drive gear carrier (13) is removable.

## Patentansprüche

1. Eine Antriebsachsanordnung (1), umfassend ein Getriebegehäuse (3, 13, 15), das aus einem Hinterachsgehäuse (3), einem Achsantriebsgetriebeträger (13) und einer Ritzellagereinheit (15) besteht, wobei die Ritzellagereinheit (15) Außen- und Innenring (27, 29) eines vorderen Kegelrollenlagers (31) sowie Außen- und Innenring (33, 35) eines hinteren Kegelrollenlagers (37) trägt, wobei beide Innenringe (29), 35) des vorderen und des hinteren Kegelrollenlagers (31, 37), eine Ritzelwelle (39) eines Ritzels (41) positionieren, wobei ein hinteres Ende (43) der Ritzelwelle (39) drehbar in einem Kugellager (23) angeordnet ist, wobei eine gegenüberliegende Schraube mit Gewinde am vorderen Ende der Ritzelwelle (39), einen Antriebsflansch (45) aufnimmt, der durch eine Mutter (47) befestigt ist, die in das vordere Ende der Ritzelwelle (39) eingreift, wobei die Innenringe (29, 35) der Kegelrollenlager (31, 37), die fest zwischen einer Nabe des Antriebsflansches (45) und dem Ritzel (41) angeordnet sind, wobei das Getriebegehäuse (3, 13, 15) eine äußere Fluidbarriere aufweist, die durch das Hinterachsgehäuse (3) gebildet wird, das mit dem Getriebeträger (13) und der Ritzellagereinheit (15) zusammengebaut ist, einen flüssigkeitsdichtenden Innenraum zum Aufnehmen einer Menge an flüssigem Schmiermittel, die ein vordefiniertes Niveau nicht überschreitet bildet, wobei das Getriebegehäuse (3, 13, 15) ein Hohlrad (52) aufnimmt, wobei das Ritzel (41) antreibend in das Hohlrad (52) eingreift, wobei das Hohlrad (52) so angepasst ist, dass es teilweise in eine Menge von flüssigem Schmiermittel eingetaucht ist, um eine Spritzverteilung des flüssigen Schmiermittels zu verursachen, wenn das Hohlrad (52) im Gebrauch in dem flüssigkeitsdichtenden Innenraum gedreht wird, wobei das Getriebegehäuse (3, 13, 15) ferner einen innersten Ritzelwellenlagersitz (21) zum Aufnehmen des Kugellagers (23) enthält und seitlich beabstandete linke und rechte Lagersitze (51, 53), die Lager aufnehmen, die ein Differentialgehäuse (50) und das Hohlrad (52) tragen, wobei der innerste Ritzelwellenlagersitz (21) und seitlich beabstandete linke und rechte Gehäuselagersitze (51, 53) über dem vordefinierten Flüssigkeitsniveau im flüssigkeitsdichtenden Innenraum zur Aufnahme des Kugellagers (23) positioniert werden, wobei das Kugellager (23) in dem innersten Ritzelwellenlagersitz (21) gehalten wird, wobei das Getriebegehäuse (3, 13, 15) ferner einen Auffangbehälter in Fluidverbindung mit dem innersten Ritzelwellenlagersitz (21) enthält und eine aufrechte Wand (25) im Achsantriebsgetriebeträger (13) ganzheitlich ausgebildet und zusammenfallend mit dem innersten Ritzelwellenlagersitz (21) ist, wobei der Auffangbehälter durch die aufrechte Wand (25) gebildet wird, um im Gebrauch einen Teil des spritzverteilten flüssigen Schmiermittels aufzufangen, **dadurch gekennzeichnet, dass** die seitlich beabstandeten linken und rechten Lagersitze (51, 53) jeweils mit einem jeweils abnehmbaren linken und rechten Lagerdeckel (57, 59) ausgebildet sind, dass an einem unteren Teil jedes der seitlich beabstandeten linken und rechten Lagersitze (51, 53) eine weitere aufrechte Wand (61) ganzheitlich ausgebildet ist, wobei die weiteren aufrechten Wände (61) jeweils aus einem ersten komplementären Wandabschnitt (61A) am Getriebeträger (13) und einem zweiten komplementären Wandabschnitt (61B) an einem der linken und rechten Lagerdeckel (57, 59) bestehen, so dass ein weiterer Auffangbehälter durch jede weitere aufrechte Wand (61) gebildet wird, um im Gebrauch einen Teil des spritzverteilten flüssigen Schmiermittels aufzufangen, wobei die weiteren aufrechten Wände (61) und der seitlich beabstandete linke und der rechte Lagersitz (51, 53) sicherstellen, dass die Lager, die das Differentialgehäuse (50) und das Hohlrad (52) tragen, ausreichend in flüssiges Schmiermittel eingetaucht sind.

2. Antriebsachsanordnung (1) nach Anspruch 1, wobei alle aufrechten Wände (25; 61) durch Gießen ganzheitlich ausgebildet sind.

3. Antriebsachsanordnung (1) nach Anspruch 1, wobei alle aufrechten Wände (25; 61) durch wenigstens eine Bearbeitung und Umformung des jeweiligen Lagersitzes (21; 51, 53) ganzheitlich ausgebildet sind.

4. Antriebsachsanordnung (1) nach Anspruch 1, 2 oder wobei der Achsantriebsgetriebeträger (13) abnehmbar ist.

## Revendications

1. Ensemble d'essieu d'entraînement (1) incorporant un boîtier de transmission à engrenage (3, 13, 15) composé d'un boîtier d'essieu arrière (3), d'un support d'engrenage d'entraînement final (13) et d'une unité de support de pignon (15), l'unité de support de pignon (15) portant des chemins de roulement externe et interne (27, 29) d'un palier à rouleaux progressivement rétréci avant (31), ainsi que des chemins de roulement externe et interne (33, 35) d'un palier à rouleaux progressivement rétréci arrière (37), les deux chemins de roulement internes (29, 35) des paliers à rouleaux progressivement rétrécis avant et arrière (31, 37) positionnant un arbre de pignon (39) d'un engrenage à pignons (41), une extrémité arrière (43) de l'arbre de pignon (39) étant tourillonnée, en rotation, dans un palier à billes (23), une extrémité avant filetée opposée de l'arbre de pignon (39) recevant une bride d'entraînement (45) fixée par un écrou (47) mettant en prise l'extrémité avant de l'arbre de pignon (39), les chemins de roulement internes (29, 35) des paliers à rouleaux progressivement rétrécis (31, 37) étant fermement positionnés entre un bossage de la bride d'entraînement (45) et l'engrenage à pignons (41), le boîtier de transmission à engrenage (3, 13, 15) ayant une barrière de fluide externe formée par le boîtier d'essieu arrière (3) qui, assemblé avec le support d'engrenage (13) et l'unité de support de pignon (15) forme un intérieur scellé de fluide pour loger une quantité de lubrifiant fluide ne dépassant pas un niveau prédéterminé, le boîtier de transmission d'engrenage (3, 13, 15) logeant une couronne (52), l'engrenage à pignons (41) mettant en prise, par entraînement, la couronne (52), la couronne (52) étant adaptée pour être partiellement immergée dans une quantité de lubrifiant fluide pour provoquer la distribution par éclaboussure du lubrifiant fluide lorsque, à l'usage, la couronne (52) tourne dans l'intérieur scellé de fluide, le boîtier de transmission à engrenage (3, 13, 15) comprenant en outre un siège de palier d'arbre de pignon (21) situé le plus à l'intérieur pour recevoir le palier à billes (23) et des sièges de paliers gauche et droit latéralement espacés (51, 53) logeant des paliers portant un carter de différentiel (50) et la couronne (52), le siège de palier d'arbre de pignon situé le plus à l'intérieur (21) et les sièges de palier de carter gauche et droit latéralement espacés (51, 53) étant positionnés au-dessus du niveau de fluide prédéfini dans l'intérieur scellé de fluide pour recevoir le palier à billes (23), ledit palier à billes (23) étant maintenu dans le siège de palier d'arbre de pignon situé le plus à l'intérieur (21), le boîtier de transmission à engrenage (3, 13, 15) comprenant en outre un réservoir de collecte en communication de fluide avec le siège de palier d'arbre de pignon situé le plus à l'intérieur (21) et formé de manière solidaire dans le support d'engrenage d'entraînement final (13) et coïncidant avec le siège de palier d'arbre de pignon situé le plus à l'intérieur (21), est dans une paroi droite (25), le réservoir de collecte étant formé par la paroi droite (25) pour capturer, à l'usage, une partie du lubrifiant fluide distribué par éclaboussure, **caractérisé en ce que** les sièges de palier gauche et droit latéralement espacés (51, 53) sont chacun formés avec un capuchon de palier gauche et droit amovible (57, 59) respectif, **en ce que**, formée au niveau d'une partie inférieure de chacun des siège de palier gauche et droit latéralement espacés (51, 53), on trouve une autre paroi droite (61), les autres parois droites (61) étant chacune composées d'une première section de paroi complémentaire (61A) sur le support d'engrenage (13) et une seconde section de paroi complémentaire (61B) sur l'un des capuchons de palier gauche et droit (57, 59) et **en ce qu'**un autre réservoir de collecte est formé par chaque paroi droite supplémentaire (61) pour capturer, à l'usage, une partie de lubrifiant fluide distribué par éclaboussure, les autres parois droites (61) et les sièges de palier gauche et droit latéralement espacés (51, 53) garantissant que les paliers portant le carter de différentiel (50) et la couronne (52) sont suffisamment immergés dans le lubrifiant fluide.

2. Ensemble d'essieu d'entraînement (1) selon la revendication 1, dans lequel toutes les parois droites (25 ; 61) sont formées de manière solidaire par moulage.

3. Ensemble d'essieu d'entraînement (1) selon la revendication 1, dans lequel toutes les parois droites (25 ; 61) sont formées de manière solidaire par au moins l'un parmi l'usinage et le formage du siège de palier (21 ; 51, 53) respectif.

4. Ensemble d'essieu d'entraînement (1) selon la revendication 1 ou 2, ou dans lequel le support d'engrenage d'entraînement final (13) est amovible.
